# EUROPEAN PATENT APPLICATION

(11) **EP 4 640 479 A1**
(43) Date of publication of application: **29.10.2025**
(21) Application number: 24171988.9
(22) Date of filing: 23.04.2024
(51) Int. Cl.: B60L 53/16, B60L 53/30, H01R 13/639, H01R 13/66

(54) **AN ELECTRIC VEHICLE CHARGING SOCKET WITH AN ELECTRICALLY CONDUCTING LATCH**

(71) Applicant: VOLVO TRUCK CORPORATION, 405 08 Göteborg (SE)
(72) Inventor: KIZHAKKE PURAKKAL, Manjusha, 673328 KOZHIKODE (IN); KAMBLE, Anurag, 441104 NAGPUR (IN)
(74) Representative: Ström & Gulliksson AB

(57) **Abstract**

An electric vehicle charging socket (1) for receiving a charging plug (50), the charging socket (1) comprising
- a latch (10) for locking the charging plug (50) to the charging socket (1), the latch (10) being movable between a release position (10R) and a lock position (10L), and
- a contact member (20) arranged to be contacted by the latch (10) in the lock position (10L), wherein the latch (10) and the contact member (20) are at least partially electrically conducting and form part of an electric feedback loop (30) in the lock position (10L).

## Description

### TECHNICAL FIELD

The disclosure relates generally to sockets for charging electric vehicles. In particular aspects, the disclosure relates to an electric vehicle charging socket for receiving a charging plug, the charging socket comprising an electrically conducting latch for locking the charging plug. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An electric vehicle may be charged via a charging plug that is connected to a charging socket of the electric vehicle. It is generally preferred that the charging plug and the charging socket are designed such that the plug may be locked to the socket. For example, it may be desired that the charging plug is locked to the charging socket during charging, for safety reasons. Moreover, such a locking may hinder a charging cable, to which the charging plug is attached, from being stolen.

### SUMMARY

According to a first aspect of the disclosure, there is provided an electric vehicle charging socket for receiving a charging plug. The charging socket comprises a latch for locking the charging plug to the charging socket, the latch being movable between a release position and a lock position. The charging socket further comprises a contact member arranged to be contacted by the latch in the lock position of the latch. The latch and the contact member are at least partially electrically conducting and form part of an electric feedback loop in the lock position.

The first aspect of the disclosure may seek to provide a particularly safe way of determining that the charging plug is locked to the charging socket. Thereby, a safe charging of the electric vehicle can be obtained. The charging is typically not initiated until it is determined that the charging plug is locked to the charging socket. Now, when the latch forms part of the feedback loop, it is possible to ensure that the latch actually is in contact with the contact member in a safe and simple manner. Once such contact is established, it is confirmed that the latch is in its lock position, and thereby that the charging plug is locked to the charging socket. If the latch should be damaged, e.g. broken, the feedback loop cannot be closed. An electric vehicle with a damaged locking arrangement for the charging plug should not be charged, and in case a locking arrangement is damaged a repair should be required before charging.

There may exist prior art solutions that involve switches arranged to determine a position of a locking means, such as a latch. However, prior art solutions are marred with drawbacks as regards the degree of certainty that the charging plug is actually locked to the charging socket. For example, the prior art solutions may falsely conclude that the charging plug is locked to the charging socket, for example if the locking means is damaged. Further, many prior art solutions may be complex, expensive and prone to wear and failure mechanical damage.

In its lock position, the latch may pass through a through-hole in the charging plug, and the socket and plug may be configured such that they are locked to one another as long as the latch passes through said through-hole. The latch may alternatively be referred to as a catch or a lock member.

Optionally in some examples, including in at least one preferred example, the latch is configured such that electricity may be conducted through the latch to form part of the electric feedback loop. Thus, again, the latch is at least partially electrically conducting. However, the entire latch needs not be electrically conducting. Further, the latch needs not be a good electrical conductor.

Optionally in some examples, including in at least one preferred example, an end of the latch is electrically conducting, the electric vehicle charging socket being configured such that said end may be arranged in contact with the contact member in the lock position of the latch. A technical benefit may include that the latch end, i.e. the latch distal end, forms part of the feedback loop. Thereby, any damage to the latch will hinder the feedback loop from being closed.

Optionally in some examples, including in at least one preferred example, an end face of the latch is electrically conducting, the electric vehicle charging socket being configured such that said end face may be arranged in contact with the contact member in the lock position of the latch. A technical benefit may include that the end face, i.e. the most distal, or ultimate, end of the latch forms part of the feedback loop. Thereby, any damage to the latch, even to its ultimate end, will hinder the feedback loop from being closed.

Optionally in some examples, including in at least one preferred example, the latch is made of an electrically conducting metal. A metal latch may ensure durability, and may be structurally strong thereby effectively hindering a charging cable, to which the charging plug is attached, being stolen. The latch may comprise an electrically conducting material, such as an electrically conducting metal.

Optionally in some examples, including in at least one preferred example, the latch is elongated and comprises a proximal end and a distal end, the electric vehicle charging socket being configured such that the distal end of the latch may be arranged in contact with the contact member in the lock position of the latch. A technical benefit may include that the distal end forms part of the feedback loop. Thereby, any damage to the latch will hinder the feedback loop from being closed.

Optionally in some examples, including in at least one preferred example, the latch comprises an interface for connection of a first electric conductor that forms part of the electric feedback loop. A technical benefit may include that a connection between the latch and the first electric conductor is simple to establish and that the connection is reliable.

Optionally in some examples, including in at least one preferred example, the electric feedback loop comprises a first electric conductor for connection to the latch, a second electric conductor for connection to the contact member, and a detector arrangement for determining whether the feedback loop is closed or not. Such a solution may be cost-effective and reliable. The detector arrangement may comprise or be connected to an electric power source. The detector arrangement may comprise a volt detector device or circuit.

Optionally in some examples, including in at least one preferred example, the contact member is configured to be arranged internally the charging plug when the charging plug is received by the charging socket. A technical benefit may include that the latch, in its lock position, may extend from externally the charging plug to internally the charging plug, typically through a through-hole of the charging plug. Thereby, the charging plug may be securely locked to the charging socket. Further, such a contact member may be retrofitted to existing charging sockets with no or only a minor redesign being required.

Optionally in some examples, including in at least one preferred example, the contact member is shaped to extend along at least 180 degrees of the charging plug. In other words, the contact member may extend along at least half the circumference of the charging plug. A technical benefit includes that the latch may lock the charging plug at a range of various positions along the circumference of the charging plug. Optionally in some examples, including in at least one preferred example, the contact member is shaped to extend around the entire charging plug.

Optionally in some examples, including in at least one preferred example, the contact member comprises a top portion and two opposing lateral portions. The term top means arranged at the top when the charging plug is inserted to the charging socket. A technical benefit includes that the latch may lock the charging plug at a top portion or at two opposing lateral portions.

Optionally in some examples, including in at least one preferred example, the contact member, and/or the latch, is made of an electrically conducting material or is made of a non-electrically conducting material with an electrically conductive coating or additive. Thus, the present electric vehicle charging socket provides flexibility as regards the design of the contact member and the latch. The use of non-electrically conducting material with an electrically conductive coating or additive may involve savings in cost and weight as compared to metal material. The contact member may comprise an electrically conducting material, such as an electrically conducting metal.

Optionally in some examples, including in at least one preferred example, the electric vehicle charging socket comprises an actuator for moving the latch between the release position and the lock position. In a relatively simple and secure solution, the actuator is adapted to linearly move the latch between the release position and the lock position. Thereby, the latch design may be relatively simple.

Optionally in some examples, including in at least one preferred example, the latch is made of an electrically conducting metal and is pin-shaped. The latch may be referred to as a lock pin or a locking pin.

Optionally in some examples, including in at least one preferred example, the electric vehicle charging socket comprises or is adapted to connected to a controller that is configured to control the movement of the latch, determine whether the feedback loop is closed or not, and output a charging initiation message, wherein the controller is configured to output the charging initiation message only if the controller determines that the feedback loop is closed.

According to a second aspect of the disclosure, there is provided a system comprising the electric vehicle charging socket of any preceding claim, the system comprising a controller configured to control the movement of the latch, determine whether the feedback loop is closed or not, and output a charging initiation message.

Optionally in some examples, including in at least one preferred example, the controller is configured to output the charging initiation message only if the controller determines that the feedback loop is closed.

According to a third aspect of the disclosure, there is provided an electric vehicle charging socket for receiving a charging plug. The charging socket comprises a latch for locking the charging plug to the charging socket, the latch being movable between a release position and a lock position. The latch is configured to contact a contact member in the lock position of the latch. The latch and the contact member are at least partially electrically conducting, and the charging socket is configured such that the latch forms part of an electric feedback loop in the lock position.

According to a fourth aspect of the disclosure, there is provided an electric vehicle comprising the electric vehicle charging socket or the system.

Optionally in some examples, including in at least one preferred example, the electric vehicle comprises a controller arrangement that is configured to control the movement of the latch, determine whether the feedback loop is closed or not, and output a charging initiation message, wherein the controller arrangement is configured to output the charging initiation message only if the controller arrangement determines that the feedback loop is closed. The controller arrangement may comprise a vehicle control unit and/or a controller of the electric vehicle charging socket.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** shows an electric vehicle charging socket according to an example, with a charging plug connected and locked thereto.
**FIG. 2** shows the electric vehicle charging socket of **FIG. 1** with the charging plug disconnected.
**FIG. 3** is a partly exploded view of the charging socket of **FIG. 1****.**
**FIG. 4** corresponds to **FIG.** 1 but illustrates a broken latch.
**FIG. 5** is an isometric view of the electric vehicle charging socket of **FIG. 1****.**
**FIG. 6** schematically illustrates an actuator and an electric feedback loop of the electric vehicle charging socket of **FIG. 1****.**
**FIG. 7** shows three examples of a latch of the electric vehicle charging socket of **FIG. 1****.**

### DETAILED DESCRIPTION

The detailed description set forth below provides information and examples of the disclosed technology with sufficient detail to enable those skilled in the art to practice the disclosure.

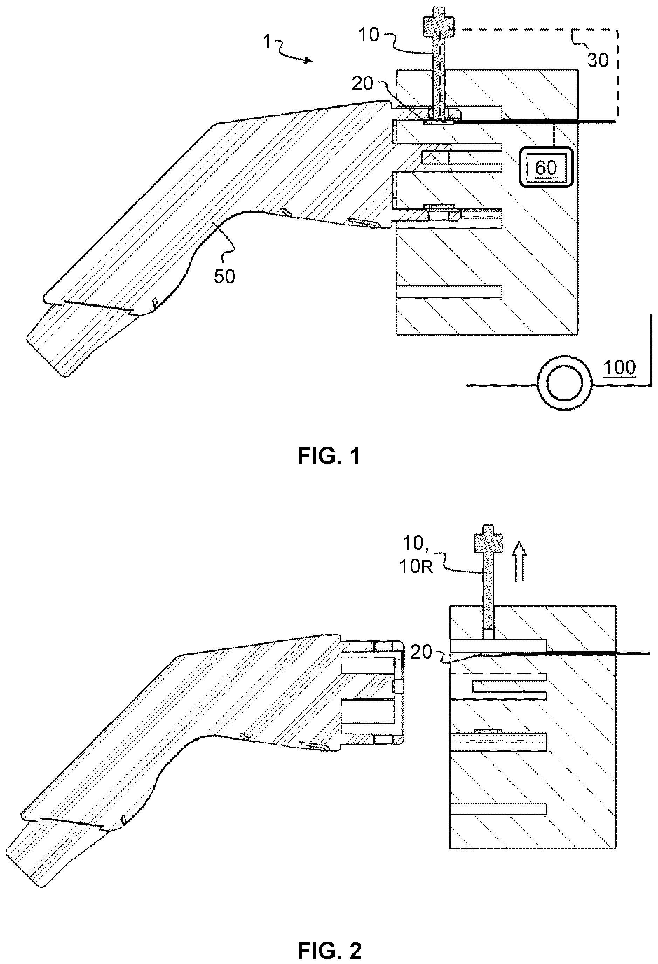

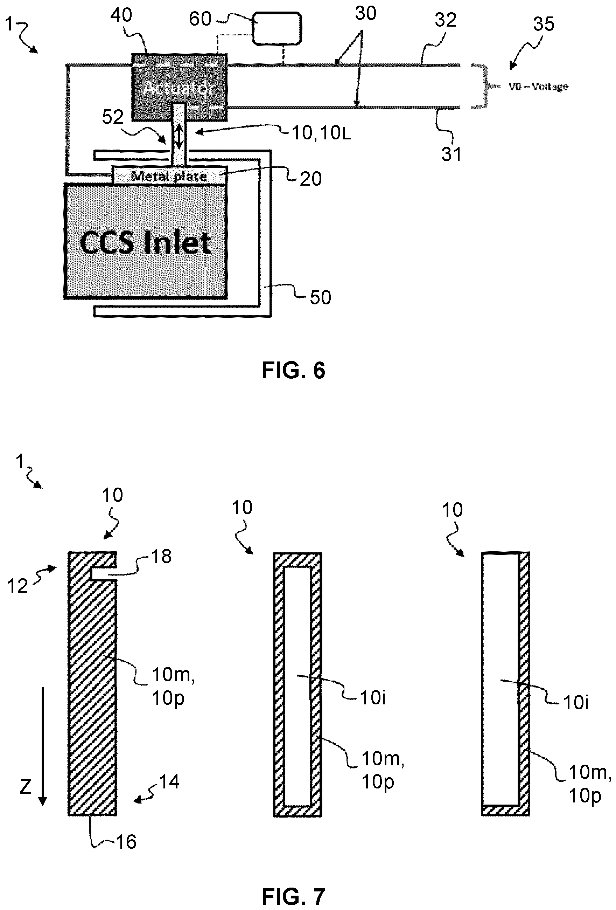

**FIG. 1** to **FIG. 7** shows an electric vehicle charging socket 1 for receiving a charging plug 50. The charging plug is shown in **FIG. 1** to **FIG. 4** and **FIG. 6****.** The charging socket 1 comprises a lock member in the form of a latch 10 for locking the charging plug 50 to the charging socket 1, as is shown in **FIG. 1** and **FIG. 6****.** The latch 10 is movable between a release position 10R, see **FIG. 2****,** and a lock position 10L, see **FIG. 1****,** **FIG. 5** and **FIG. 6****.** The latch 10, in three examples, is illustrated in **FIG. 7****.**

The charging socket 50 further comprises a contact member 20 arranged to be contacted by the latch 10 in the lock position 10L as is illustrated in **FIG. 1****,** **FIG. 5** and **FIG. 6****.** The latch 10 and the contact member 20 are at least partially electrically conducting and form part of an electric feedback loop 30 in the lock position 10L, as is best illustrated in **FIG. 6****.**

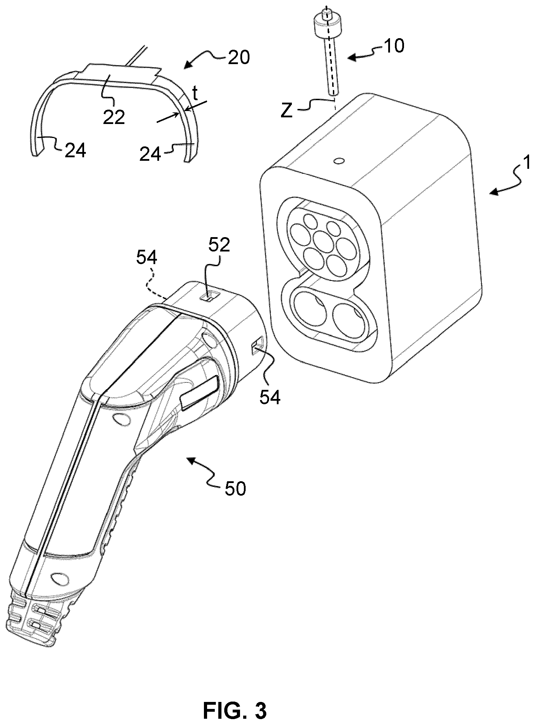

The latch 10 may, as in the present examples, be configured such that electricity may be conducted through the latch 10 to form part of the electric feedback loop 30. As is shown, the present latch 10 is elongated and configured such that electricity may be conducted along a longitudinal direction Z (denoted in **FIG. 3****)** of the latch 10 to form part of the electric feedback loop 30.

In the present examples, an end face 16 **(****FIG. 7****)** of the latch 10 is electrically conducting. The present electric vehicle charging socket 1 is configured such that said end face 16 may be arranged in contact with the contact member 20 in the lock position 10L of the latch 10, see each one of **FIG. 1****,** **FIG. 5** and **FIG. 6****.** The present electric vehicle charging socket 1 may be a Combined Charging System inlet (CCS inlet).

The latch 10 may be made of an electrically conducting material 10m, 10p or is made of a non-electrically conducting material 10i with an electrically conductive coating or additive, see in particular **FIG. 7****.** For example, the latch 10 may be made of an electrically conducting metal 10m, an electrically conducting polymer 10p, or a non-electrically conducting material 10i with a conductive coating comprising an electrically conducting material 10m, 10p. The coating material 10m may be metal of an electrically conducting polymer 10p. In one example, the latch 10 is entirely made of an electrically conducting metal 10m. The present latch 10 is made of an electrically conducting metal 10m and is pin-shaped.

Referring still to **FIG. 7****,** the latch 10 may comprise an electrically conducting material 10m, 10p at an end face 16 thereof, the electric vehicle charging socket 1 being configured such that said end face 16 may be arranged in contact with the contact member 20 in the lock position 10L of the latch 10, see e.g. **FIG. 1****.** As is also illustrated, the latch 10 may be elongated and comprise a proximal end 12 and a distal end 16 (closest to the contact member 20), the electric vehicle charging socket 1 being configured such that the distal end 16 of the latch 10 may be arranged in contact with the contact member 20 in the lock position 10L of the latch 10.

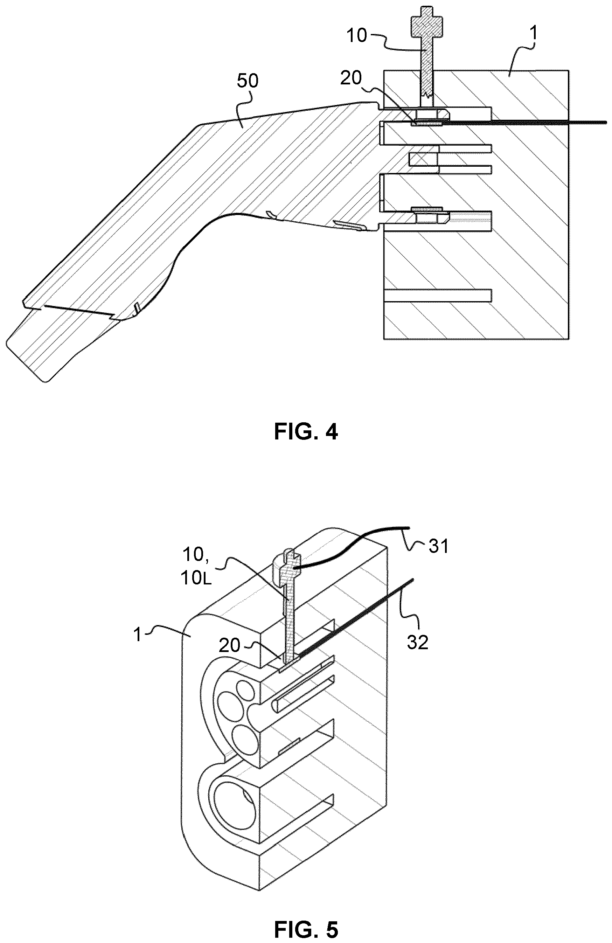

As is illustrated to the left in **FIG. 7****,** the latch 10 may comprise an interface 18 for connection of a first electric conductor 31 that forms part of the electric feedback loop 30. The interface 18 may be a blind hole or a through-hole, optionally at least partly provided with internal threads. Alternatively, the interface 18 may be adapted for the attachment of a cable lug thereto. The present electric feedback loop 30, see **FIG. 5** or **FIG. 6****,** may comprise a first electric conductor 31 for connection to the latch 10 and a second electric conductor 32 for connection to the contact member 20. The electric feedback loop 30 may further comprise an undepicted detector arrangement 35 for determining whether the feedback loop 30 is closed or not. The logic of the detector arrangement may alternatively be incorporated in a separate vehicle control unit or in a control arrangement of the charging socket. As one example, a controller 60 is schematically illustrated in **FIG. 1** and **FIG. 6****.**

The latch 10 may comprise an interface 18, as exemplified above, for connection of the first electric conductor 31 and the contact member 20 may be adapted for connection to the second electric conductor 32. The second electric conductor 32 may for example comprise a cable lug.

As is illustrated, the present latch 10 is elongated and comprises a proximal end 12 that comprises the interface 18 for connection of the first electric conductor 31, and a distal end 16 that is configured to be arranged in contact with the contact member 20 in the lock position 10L of the latch 10. The charging socket 1 may comprise the first electric conductor 31, the second electric conductor 32 and optionally (as mentioned) the detector arrangement 35.

Referring in particular to **FIG. 1** and **FIG. 5****,** the contact member 20 may be configured to be arranged internally the charging plug 50 when the charging plug 50 is received by the charging socket 1. The present contact member 20 has a radial thickness t, denoted in **FIG. 3****,** below 3 millimeters. The contact member 20 may be shaped to extend along at least 180 degrees of the charging plug 50. Still referring to **FIG. 3****,** the contact member 20 may comprise a top portion 22 and two opposing lateral portions 24. The present the contact member 20 is made of sheet metal and may be referred to as a metal plate. The present contact member 20 is a bent metal plate. The contact member 20 may alternatively be made of a non-electrically conducting material with an electrically conductive coating or additive. In its lock position, the latch 10 may pass through a through-hole 52 in the charging plug 50. The charging plug 50 may comprise a plurality of through-hole 52, 54 for one or more latches 10 see **FIG. 3****.** An advantage of the contact member 20 extending along a substantial part, such as at least 90, at least 180, or even 360 degrees around the charging plug 50 is that one and the same contact member 20 may cooperate with a latch 10 positioned at various positions along the circumference of the charging plug 50.

As is schematically illustrated in **FIG. 6****,** the charging socket 1 may comprise an actuator 40 for moving the latch 10 between the release position 10R and the lock position 10L. The actuator 40 is typically an electric actuator. The present actuator 40 is adapted to linearly move the latch 10 between the release position 10R and the lock position 10L.

Referring especially to **FIG. 1** and **FIG. 6****,** the present charging socket 1 may comprise a controller 60. In other examples, the charging socket 1 may instead be connected to an undepicted controller that is not comprised in the charging socket 1. For example, the charging socket 1 may be connected to a vehicle control unit of a vehicle 100 that comprises the charging socket 1. The controller 60 may be connected to, or may comprise, the detector arrangement 35. In other examples, the charging socket 1 may be part of a system, wherein the system further comprises the controller 60. In other words, the system may comprise the charging socket 1 and the controller 60.

The controller 60 may be configured to control the movement of the latch 10. As is illustrated by the dotted line in **FIG. 6****,** the controller 60 may be connected to the actuator 40 and may be configured to control the actuator 40. The controller 60 may be configured to cause the actuator 40 to move the latch 10 between the release position 10R and the lock position 10L.

The controller 60 may be configured to determine whether the feedback loop 30 is closed or not. For example, as is illustrated by the dotted lines in **FIG. 1** and **FIG. 6****,** the controller 60 may be connected to the feedback loop 30. In some detail, the controller 60 may be adapted determine whether the feedback loop 30 is closed or not by applying a voltage, VO, across the first electric conductor 31 and the second electric conductor 32.

The controller 60 may be configured to output a charging initiation message in case the controller 60 determines that the feedback loop 30 is closed. The charging initiation message may be sent to an electric vehicle charger that is adapted to provide a charging current to the charging plug 50. In other examples the controller 60 may initiate charging when determining that the feedback loop 30 is closed. In other words, the controller 60 may be configured to initiate a charging process either by transmitting the charging initiation message or by initiating the charging.

A typical operation involving the electric vehicle charging socket 1 will next be described. The controller 60 is below considered part of the charging socket 1, even though, as has been described, some or all steps performed by the controller 60 may in some examples be performed by another control unit. The operation may alternatively be performed by the system that comprises the charging socket 1 and the controller 60.

The operation may include the charging plug 50 being inserted into the charging socket 1. The controller 60 may be adapted to detect that the charging plug 50 has been inserted in a manner not described herein.

Next, the controller 60 may attempt to lock the charging plug 50 to the charging socket 1 by controlling the actuator 40. For example, the controller 60 may power an undepicted electric motor of the actuator 40. Said motor may be arranged to move the latch 10 from the release position 10R to the lock position 10L.

Subsequent, the controller 60 may determine whether the feedback loop 30 is closed or not. If the feedback loop 30 is closed, the controller 60 may output the charging initiation message. If the controller 60 determines that the feedback loop 30 is not closed, the controller may repeatedly control the actuator 40 to lock the charging plug 50 a number of times, such as one, two or three to five more times. Each such repeated locking may involve the controller controlling the actuator to move the latch 10 from the lock position 10L to the release position 10R and then from the release position 10R to the lock position 10L. Such repeated locking may be beneficial as it may remove possible foreign objects that hinder the movement of the latch or hinder the feedback loop 30 from being closed. If the controller 60 determines that the feedback loop 30 is not closed, even after optional repeated locking attempts, the controller 60 may output an error message. The error message may inform a user that service or repair is required.

FIG. 1 schematically indicates an electric vehicle 100 that comprises the electric vehicle charging socket 1. The electric vehicle 100 may be a heavy-duty vehicle such as an electric truck. Electric heavy-duty vehicles may be charged with particularly high charging currents any therefor the present safe electric vehicle charging socket 1 may be particularly suited for such vehicles.

Also discloses are examples according to the following clauses:
1. An electric vehicle charging socket (1) for receiving a charging plug (50), the charging socket (1) comprising
   - a latch (10) for locking the charging plug (50) to the charging socket (1), the latch (10) being movable between a release position (10R) and a lock position (10L), and
   - a contact member (20) arranged to be contacted by the latch (10) in the lock position (10L),
   wherein the latch (10) and the contact member (20) are at least partially electrically conducting and form part of an electric feedback loop (30) in the lock position (10L).
2. The electric vehicle charging socket (1) of clause 1, wherein the latch (10) is configured such that electricity may be conducted through the latch (10) to form part of the electric feedback loop (30).
3. The electric vehicle charging socket (1) of clause 1 or 2, wherein the latch (10) is elongated and configured such that electricity may be conducted along a longitudinal direction (Z) of the latch (10) to form part of the electric feedback loop (30).
4. The electric vehicle charging socket (1) of clause 2 or 3, wherein an end face (16) of the latch (10) is electrically conducting, the electric vehicle charging socket (1) being configured such that said end face (16) may be arranged in contact with the contact member (20) in the lock position (10L) of the latch (10).
5. The electric vehicle charging socket (1) according to any of clauses 2 to 4, wherein the latch (10) is made of an electrically conducting material (10m, 10p) or is made of a non-electrically conducting material (10i) with an electrically conductive coating or additive.
6. The electric vehicle charging socket (1) of clause 5, wherein the latch (10) is made of an electrically conducting metal (10m), an electrically conducting polymer (10p), or a non-electrically conducting material (10i) with a conductive coating comprising an electrically conducting material (10m, 10p).
7. The electric vehicle charging socket (1) of any preceding clause, wherein the latch (10) is made of an electrically conducting metal (10m).
8. The electric vehicle charging socket (1) according to any of clauses 5 to 7, wherein the latch (10) comprises an electrically conducting material (10m, 10p) at an end face (16) thereof, the electric vehicle charging socket (1) being configured such that said end face (16) may be arranged in contact with the contact member (20) in the lock position (10L) of the latch (10).
9. The electric vehicle charging socket (1) of any preceding clause, wherein the latch (10) is elongated and comprises a proximal end (12) and a distal end (16), the electric vehicle charging socket (1) being configured such that the distal end (16) of the latch (10) may be arranged in contact with the contact member (20) in the lock position (10L) of the latch (10).
10. The electric vehicle charging socket (1) of any preceding clause, wherein the latch (10) comprises an interface (18) for connection of a first electric conductor (31) that forms part of the electric feedback loop (30).
11. The electric vehicle charging socket (1) of any preceding clause, wherein the electric feedback loop (30) comprises a first electric conductor (31) for connection to the latch (10), a second electric conductor (32) for connection to the contact member (20), and a detector arrangement (35) for determining whether the electric feedback loop (30) is closed or not.
12. The electric vehicle charging socket (1) of any clause 11, wherein the latch (10) comprises an interface (18) for connection of the first electric conductor (31) and the contact member (20) is adapted for connection to the second electric conductor (32).
13. The electric vehicle charging socket (1) of clause 12, wherein the latch (10) is elongated and comprises a proximal end (12) that comprises the interface (18) for connection of the first electric conductor (31), and a distal end (16) that is configured to be arranged in contact with the contact member (20) in the lock position (10L) of the latch (10).
14. The electric vehicle charging socket (1) according to any of clauses 11 to 13, comprising the first electric conductor (31), the second electric conductor (32) and optionally the detector arrangement (35).
15. The electric vehicle charging socket (1) of any preceding clause, wherein the contact member (20) is configured to be arranged internally the charging plug (50) when the charging plug (50) is received by the charging socket (1).
16. The electric vehicle changing socket (1) of clause 15, wherein the contact member (20) has a radial thickness (t) below 3 millimeters.
17. The electric vehicle changing socket (1) of clause 15 or 16, wherein the contact member (20) is shaped to extend along at least 180 degrees of the charging plug (50).
18. The electric vehicle charging socket (1) according to any of clauses 15 to 17, wherein the contact member (20) comprises a top portion (22) and two opposing lateral portions (24).
19. The electric vehicle charging socket (1) according to any of clauses 15 to 18, wherein the contact member (20) is made of an electrically conducting material or is made of a non-electrically conducting material with an electrically conductive coating or additive.
20. The electric vehicle charging socket (1) according to any of clauses 15 to 19, wherein the contact member (20) is made of an electrically conducting metal.
21. The electric vehicle charging socket (1) of clause 20, wherein the contact member (20) is made of sheet metal.
22. The electric vehicle charging socket (1) of any preceding clause, comprising an actuator (40) for moving the latch (10) between the release position (10R) and the lock position (10L).
23. The electric vehicle charging socket (1) of clause 22, wherein the actuator (40) is adapted to linearly move the latch (10) between the release position (10R) and the lock position (10L).
24. The electric vehicle charging socket (1) of clause 23, wherein the latch (10) is made of an electrically conducting metal (10m) and is pin-shaped.
25. The electric vehicle charging socket (1) of any preceding clause, adapted to be connected to a controller that is configured to
   control the movement of the latch (10),
   determine whether the feedback loop (30) is closed or not, and
   output a charging initiation message,
   wherein the controller is configured to output the charging initiation message only if the controller determines that the feedback loop (30) is closed.
26. The electric vehicle charging socket (1) according to any of clauses 1 to 24, comprising a controller (60) that is configured to
   control the movement of the latch (10),
   determine whether the feedback loop (30) is closed or not, and
   output a charging initiation message,
   wherein the controller (60) is configured to output the charging initiation message only if the controller (60) determines that the feedback loop (30) is closed.
27. A system comprising the electric vehicle charging socket (1) according to any of clause 1 to 24, the system comprising a controller (60) configured to
   control the movement of the latch (10),
   determine whether the feedback loop (30) is closed or not, and
   output a charging initiation message.
28. The system of clause 27, wherein the controller (60) is configured to output the charging initiation message only if the controller (60) determines that the feedback loop (30) is closed.
29. An electric vehicle (100) comprising the electric vehicle charging socket (1) of any preceding clause.
30. The electric vehicle (100) of clause 29, comprising a controller arrangement that is configured to
   control the movement of the latch (10),
   determine whether the feedback loop (30) is closed or not, and
   output a charging initiation message,
   wherein the controller arrangement is configured to output the charging initiation message only if the controller determines that the feedback loop (30) is closed.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An electric vehicle charging socket (1) for receiving a charging plug (50), the charging socket (1) comprising
- a latch (10) for locking the charging plug (50) to the charging socket (1), the latch (10) being movable between a release position (10R) and a lock position (10L), and
- a contact member (20) arranged to be contacted by the latch (10) in the lock position (10L),
wherein the latch (10) and the contact member (20) are at least partially electrically conducting and form part of an electric feedback loop (30) in the lock position (10L).

2. The electric vehicle charging socket (1) of claim 1, wherein the latch (10) is configured such that electricity may be conducted through the latch (10) to form part of the electric feedback loop (30).

3. The electric vehicle charging socket (1) of claim 1 or 2, wherein an end face (16) of the latch (10) is electrically conducting, the electric vehicle charging socket (1) being configured such that said end face (16) may be arranged in contact with the contact member (20) in the lock position (10L) of the latch (10).

4. The electric vehicle charging socket (1) of any preceding claim, wherein the latch (10) is made of an electrically conducting metal (10m).

5. The electric vehicle charging socket (1) of any preceding claim, wherein the latch (10) is elongated and comprises a proximal end (12) and a distal end (16), the electric vehicle charging socket (1) being configured such that the distal end (16) of the latch (10) may be arranged in contact with the contact member (20) in the lock position (10L) of the latch (10).

6. The electric vehicle charging socket (1) of any preceding claim, wherein the electric feedback loop (30) comprises a first electric conductor (31) for connection to the latch (10), a second electric conductor (32) for connection to the contact member (20), and a detector arrangement (35) for determining whether the electric feedback loop (30) is closed or not.

7. The electric vehicle charging socket (1) of any preceding claim, wherein the contact member (20) is configured to be arranged internally the charging plug (50) when the charging plug (50) is received by the charging socket (1).

8. The electric vehicle changing socket (1) of claim 7, wherein the contact member (20) is shaped to extend along at least 180 degrees of the charging plug (50).

9. The electric vehicle charging socket (1) according to claim 7 or 8, wherein the contact member (20) comprises a top portion (22) and two opposing lateral portions (24).

10. The electric vehicle charging socket (1) according to any of claims 8 to 10, wherein the contact member (20) is made of an electrically conducting material or is made of a non-electrically conducting material with an electrically conductive coating or additive.

11. The electric vehicle charging socket (1) of any preceding claim, comprising an actuator (40) for moving the latch (10) between the release position (10R) and the lock position (10L).

12. The electric vehicle charging socket (1) of claim 11, wherein the actuator (40) is adapted to linearly move the latch (10) between the release position (10R) and the lock position (10L), and wherein the latch (10) is made of an electrically conducting metal (10m) and is pin-shaped.

13. A system comprising the electric vehicle charging socket (1) of any preceding claim, the system comprising a controller (60) configured to
control the movement of the latch (10),
determine whether the feedback loop (30) is closed or not, and
output a charging initiation message.

14. The system of claim 13, wherein the controller (60) is configured to output the charging initiation message only if the controller (60) determines that the feedback loop (30) is closed.

15. An electric vehicle (100) comprising the electric vehicle charging socket (1) according to any of claims 1 to 12 or the system of claim 13 or 14.
